(19) Europäisches Patentamt
European Patent Office
Office européen des brevets

(11) **EP 4 668 547 A1**

(12) **EUROPEAN PATENT APPLICATION**
published in accordance with Art. 153(4) EPC

(43) Date of publication:
**24.12.2025 Bulletin 2025/52**

(21) Application number: **24784607.4**

(22) Date of filing: **15.02.2024**

(51) International Patent Classification (IPC):
***H02K 1/276*** *(2022.01)*

(52) Cooperative Patent Classification (CPC):
**H02K 1/276**

(86) International application number:
**PCT/JP2024/005233**

(87) International publication number:
**WO 2024/209804 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **03.04.2023 JP 2023060098**

(71) Applicant: **NIPPON STEEL CORPORATION**
**Chiyoda-ku**
**Tokyo 100-8071 (JP)**

(72) Inventor: **HONMA, Rei**
**Tokyo 100-8071 (JP)**

(74) Representative: **Vossius & Partner**
**Patentanwälte Rechtsanwälte mbB**
**Siebertstrasse 3**
**81675 München (DE)**

(54) **ROTOR CORE, ROTOR, ROTARY ELECTRIC MACHINE, AND METHOD OF DESIGNING ROTOR CORE**

(57) In a rotor core (31), a plurality of third flux barriers (37) provided corresponding to at least one magnetic pole (33) of a plurality of magnetic poles (33) are formed. In the rotor core (31), a first insertion hole (34f) into which a permanent magnet (32) (front magnet (32f)) disposed closer to a forward side F than another of magnetic poles (33) is inserted is formed. The third flux barrier (37) is provided at a position facing a first side surface on an outer side in a radial direction of the rotor core (31), between the side surfaces of the first insertion hole (34f) in a transverse direction, and is connected to the first side surface.

FIG. 5

EP 4 668 547 A1

## Description

TECHNICAL FIELD

The present invention relates to a rotor core, a rotor, a rotary electric machine, and a designing method for the rotor core.

Priority is claimed on Japanese Patent Application No. 2023-060098, filed April 3, 2023, the content of which is incorporated herein by reference.

BACKGROUND ART

In the related art, for example, a rotary electric machine described in Patent Document 1 below is known.

Citation List

Patent Document

Patent Document 1: Japanese Patent No. 5985358

SUMMARY OF INVENTION

Technical Problem

In such a type of interior permanent magnet synchronous motor (IPMSM), there is a growing demand for practical implementation of techniques capable of curbing torque pulsation (torque ripple).

The present invention has been made in view of the above-described circumstance, and an object of the present invention is to reduce torque pulsation.

Solution to Problem

<1> A rotor core according to an aspect of the present invention is a rotor core used in an interior permanent magnet motor, to which a plurality sets of permanent magnets that form magnetic poles are to be disposed in a circumferential direction of the rotor core; wherein: a plurality of insertion holes penetrating through the rotor core in an axial direction of the rotor core and into which the permanent magnets are to be inserted are formed in the rotor core; a flux barrier provided corresponding to at least one of the plurality of magnetic poles is formed in the rotor core; the insertion holes include a first insertion hole into which the permanent magnet disposed closer to a rotational forward side than another of the magnetic poles is to be inserted; and the flux barrier is provided at a position facing a first side surface outward in a radial direction of the rotor core, between side surfaces of the first insertion hole in a transverse direction, and is connected to the first side surface.

<2> A rotor core according to an aspect of the present invention is a rotor core used in an interior permanent magnet motor, to which a plurality sets of permanent magnets that form magnetic poles are to be disposed in a circumferential direction of the rotor core, wherein: a plurality of insertion holes penetrating through the rotor core in an axial direction of the rotor core and into which the permanent magnets are to be inserted are formed in the rotor core; a flux barrier provided corresponding to at least one of the plurality of magnetic poles is formed in the rotor core; the insertion holes include a first insertion hole into which the permanent magnet disposed closer to a rotational forward side than another of the magnetic poles is to be inserted; and the flux barrier is provided close to the first insertion hole to partition a magnetic flux generated from a permanent magnet inserted into the first insertion hole in the circumferential direction at a position facing a first side surface outward in a radial direction of the rotor core between side surfaces of the first insertion hole in a transverse direction.

<3> In the rotor core according to <1> or <2>, the flux barrier may have a portion that becomes larger in a circumferential direction of the rotor core outward in the radial direction.

<4> In the rotor core according to any one of <1> to <3>, the flux barrier may block a magnetic flux from a rotational rearward side to a rotational forward side of the magnetic pole among magnetic fluxes generated from the permanent magnet inserted into the first insertion hole.

<5> In the rotor core according to any one of <1> to <4>, a bridge may be provided in a portion located outward in the radial direction of the rotor core with respect to the flux barrier.

<6> A rotor according to another aspect of the present invention includes: the rotor core according to any one of <1> to <5>; and the plurality sets of permanent magnets embedded in the rotor core and forming a magnetic pole, and disposed in a circumferential direction of the rotor core in the rotor core.

<7> A rotary electric machine according to still another aspect of the present invention includes an annular stator and the rotor according to <6> disposed in the stator.

<8> In the rotary electric machine according to <7>, a barrier opening angle θw in a circumferential direction of the rotor in an outer circumferential side surface of the flux barrier located outward in a radial direction of the rotor may satisfy Formulae (1) and (2) below.

When $(2/5)\theta s < \theta m < (3/4)\theta s$,

$$0 < \theta w < (22/7)\theta m - (44/35)\theta s \ ... \ (1)$$

when $(3/4)\theta s \le \theta m < (9/10)\theta s$,

$$0 < \theta w < -(22/3)\theta m + (33/5)\theta s \ ... \ (2)$$

$$\theta s = 2\pi/\text{Nslot} \ ... \ (3)$$

where Nslot in the above Formula (3) is the number of slots of the stator.

$\theta m$ is a barrier central angle formed between a circumferential central position on the outer circumferential side surface and an outer end portion in the radial direction of the flux barrier extending rotationally forward from the first insertion hole.

<9> A method of designing a rotor core according to still another aspect of the present invention is the method of designing a rotor core according to any one of <1> to <5>. The method includes a step of designing a position and a shape of the flux barrier based on a magnetic flux of the magnetic pole close to a rotational forward side.

<10> In the method of designing the rotor core according to <9>, in the step, the position and the shape of the flux barrier may be designed to block a magnetic flux that generates a rotational forward torque among magnetic fluxes in the magnetic pole close to the rotational forward side when the torque becomes maximum, and to block a magnetic flux that generates a rotational rearward torque among magnetic fluxes in the magnetic pole close to the rotational forward side when the torque becomes minimum.

Advantageous Effects of Invention

According to the present invention, torque pulsation is reduced.

BRIEF DESCRIPTION OF DRAWINGS

[FIG. 1] A diagram illustrating a rotary electric machine according to an embodiment of the present invention and is a plan view including a partial cross section.

[FIG. 2] An enlarged plan view illustrating a stator and a rotor included in the rotary electric machine illustrated in FIG. 1.

[FIG. 3] An enlarged plan view illustrating the rotor included in the rotary electric machine illustrated in FIG. 1.

[FIG. 4] A diagram including a partial cross section of a rotary electric machine according to the embodiment of the present invention, and an enlarged plan view illustrating a rotor included in the rotary electric machine.

[FIG. 5] An enlarged plan view schematically illustrating a part of the rotor illustrated in FIG. 3.

[FIG. 6] A plan view illustrating a rotary electric machine according to a comparative example.

[FIG. 7] A graph illustrating a result obtained by comparing torque ripples of the rotary electric machine according to the embodiment and the rotary electric machine according to the comparative example by electromagnetic field analysis.

[FIG. 8] A plan view illustrating a rotor capable of optimally reducing torque pulsation in the rotary electric machine according to the embodiment.

[FIG. 9] A plan view illustrating a rotor in which an average torque becomes maximum in a rotary electric machine according to the comparative example.

[FIG. 10] A graph illustrating a relationship between an electric angle and a torque between the rotary electric machine according to the embodiment and the rotary electric machine according to the comparative example.

[FIG. 11] A plan view illustrating a magnetic flux density vector when a rotor is located at an electric angle at which a torque waveform of a rotary electric machine according to the comparative example becomes minimum in the rotary electric machine according to the embodiment.

[FIG. 12] A plan view illustrating a magnetic flux density vector when a rotor is located at an electric angle at which a torque waveform becomes minimum in the rotary electric machine according to the comparative example.

[FIG. 13] A plan view illustrating a magnetic flux density vector when a rotor is located at an electric angle at which a torque waveform of the rotary electric machine according to the comparative example becomes maximum in the rotary electric machine according to the embodiment.

[FIG. 14] A plan view illustrating a magnetic flux density vector when a rotor is located at an electric angle at which a torque waveform is maximum in the rotary electric machine according to the comparative example.

DESCRIPTION OF EMBODIMENTS

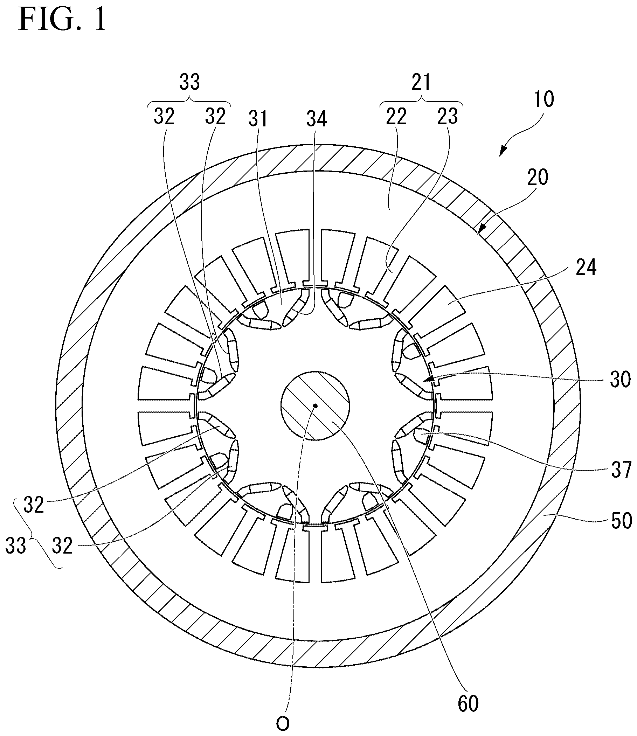

Hereinafter, a rotor core, a rotor, a rotary electric machine, and a method of designing the rotor core according to an embodiment of the present invention will be described with reference to FIGS. 1 to 14. The rotary electric machine is an electric motor, specifically, an AC electric motor, more specifically, a synchronous electric motor, and still more specifically, a permanent magnet field type electric motor. Such a type of electric motor is adopted appropriately in, for example, an electric vehicle.

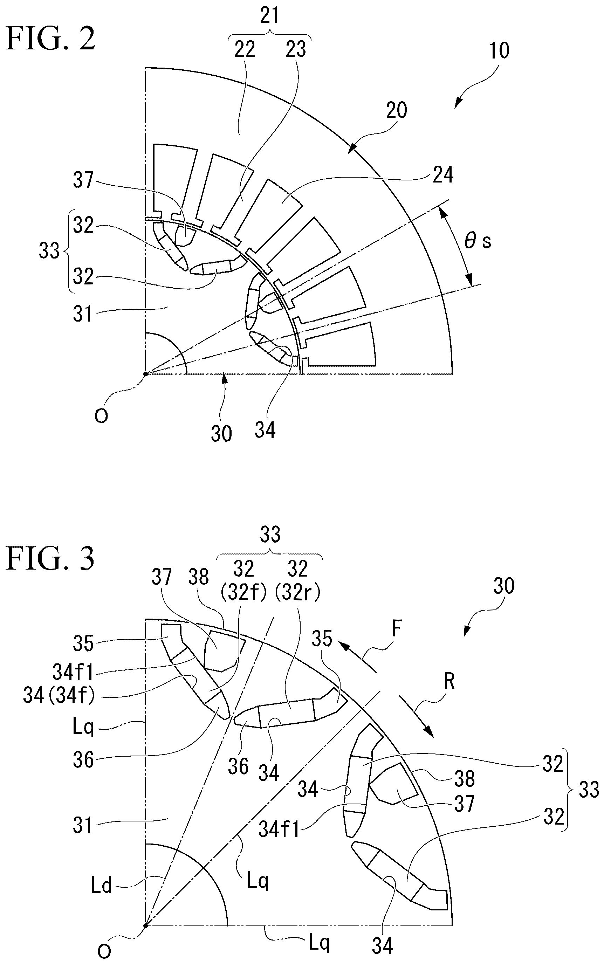

As illustrated in FIGS. 1 and 2, a rotary electric machine 10 includes a stator 20, a rotor 30, a case 50, and a rotary shaft 60. The stator 20 and the rotor 30 are housed in the case 50. The stator 20 is fixed to the case 50. The rotary electric machine 10 is of an inner rotor type in which the rotor 30 is located inside the stator 20.

In the embodiment, the rotary electric machine 10 is a three-phase AC motor that has eight poles and twenty four slots. However, for example, the number of poles, the number of slots, the number of phases, and the like can be changed appropriately.

In the rotary electric machine 10, the axes of the stator 20 and the rotor 30 are on a common axis. Hereinafter, this common axis is referred to as a central axis O (a center axis of the rotor 30). A direction of the central axis O (an axial direction of a rotor core 31 to be described below) is referred to as an axial direction, a direction orthogonal to the central axis O (a radial direction of the rotor core 31 described below) is referred to as a radial direction, and a direction circling around the central axis O (a circumferential direction of the rotor core 31 to be described below) is referred to as a circumferential direction.

The stator 20 includes a stator core 21 and a winding (not illustrated).

The stator core 21 includes a core back 22 (yoke) that has a cylindrical shape (cylinder shape) and a plurality of teeth 23.

The core back 22 is formed in an annular shape (annular shape) in a plan view of the rotary electric machine 10 viewed in the axial direction.

The plurality of teeth 23 protrude inward in the radial direction from the core back 22 (toward the central axis O of the core back 22 in the radial direction). The plurality of teeth 23 are disposed at equal intervals in the circumferential direction. In the embodiment, twenty four teeth 23 are provided at central angle intervals of 15 degrees about the central axis O. The plurality of teeth 23 are formed in the same shape and the same size. A slot 24 is formed between the teeth 23 adjacent in the circumferential direction.

The winding is wound around the tooth 23. The winding may be wound concentratedly or may be wound distributedly.

As illustrated in FIG. 3, the rotor 30 is disposed inward in the radial direction with respect to the stator 20 (the stator core 21). The rotor 30 includes the rotor core 31 and a plurality of permanent magnets 32.

The rotor core 31 is formed in a cylindrical shape (circular shape) disposed coaxially with the stator 20. The rotary shaft 60 is disposed in the rotor core 31. The rotary shaft 60 is fixed to the rotor core 31 to rotate together with the rotor core 31.

The plurality of permanent magnets 32 are fixed to the rotor core 31. In the rotor core 31, the plurality of magnetic poles 33 are formed. In the embodiment, a pair of permanent magnets 32 form one magnetic pole 33. The plurality sets of permanent magnets 32 forming the plurality of magnetic poles 33 are arranged at equal intervals in the circumferential direction. In the embodiment, eight sets of (sixteen in total) permanent magnets 32 are provided every 45 degrees of the central angle about the central axis O.

The rotary electric machine 10 is an interior permanent magnet synchronous motor (IPMSM). A plurality of insertion holes 34 penetrating the rotor core 31 in the axial direction are formed in the rotor core 31. The plurality of insertion holes 34 are provided corresponding to the plurality of permanent magnets 32. Each permanent magnet 32 is fixed to the rotor core 31 while being inserted into the corresponding insertion hole 34. That is, the insertion hole 34 forms a space where the permanent magnet 32 can be installed. In the embodiment illustrated in FIG. 3, the permanent magnet 32 has a quadrangular shape that has a longitudinal direction, and the insertion hole 34 also has a shape including a similar quadrangular portion having a longitudinal direction. The fixing of each permanent magnet 32 to the rotor core 31 can be realized, for example, by bonding the outer surface of the permanent magnet 32 and the inner surface of the insertion hole 34 with an adhesive.

Stacked cores can be used as the stator core 21 and the rotor core 31. The stacked core is formed by stacking a plurality of electrical steel sheets. The stacked electrical steel sheets are fixed to each other by, for example, crimping, adhering, welding, or the like.

Each of the electrical steel sheets forming the stator core 21 and the rotor core 31 is formed by, for example, punching an electrical steel sheet serving as a base metal. As the electrical steel sheet, a known electrical steel sheet can be used. A chemical composition of the electrical steel sheet is not particularly limited. In the embodiment, a non-oriented electrical steel sheet is adopted as the electrical steel sheet. As the non-oriented electrical steel sheet, a non-oriented electric steel strip of JIS C 2552:2014 can be adopted. However, as the electrical steel sheet, a grain-oriented electrical steel sheet can be used instead of the non-oriented electrical steel sheet. As the grain-oriented electrical steel sheet, for example, a grain-oriented electric steel strip of JIS C 2553:2012 can be used.

In order to improve workability of the electrical steel sheet and iron loss of the stacked core, insulating coatings are provided on both surfaces of the electrical steel sheet. As a substance of the insulating coating, for example, (1) an inorganic compound, (2) an organic resin, or (3) a mixture of an inorganic compound and an organic resin can be applied. Examples of the inorganic compound include (1) complexes of a dichromate and boric acid and (2) complexes of a phosphate and silica. Examples of the organic resin include epoxy-based resins, acrylic resins, acrylic styrene-based resins, polyester-based resins, silicon-based resins, and fluorine-based resins.

Hereinafter, details of the rotor 30 will be described.

As illustrated in FIG. 3, the permanent magnets 32 are embedded in the rotor core 31 and two permanent magnets 32 are paired to form one magnetic pole 33, as described above. A plurality of pairs (eight pairs in the illustrated example) of permanent magnets 32 are disposed in the rotor core 31 in the circumferential direction. In the illustrated example, the permanent magnet 32 has a rectangular parallelepiped shape. The permanent magnet 32 has a rectangular shape in a plan view.

The pair of permanent magnets 32 is disposed in a V shape protruding inward in the radial direction in the plan view. The pair of permanent magnets 32 is disposed to be line-symmetrical with respect to the d-axis Ld in the plan view. The d-axis Ld passes through the central axis O and the circumferential center of each magnetic pole 33 in the plan view. Similarly, the insertion holes 34 in which the pair of permanent magnets 32 is arranged are disposed to be substantially line-symmetrical with respect to the d-axis Ld.

The insertion hole 34 is larger on both the q-axis Lq side and the d-axis Ld side than the permanent magnet 32 in the plan view. The q-axis Lq passes through the central axis O and between two magnetic poles 33 adjacent in the circumferential direction in the plan view. The q-axis Lq passes through the center in the circumferential direction between the two magnetic poles 33 in the plan view. The q-axis Lq and the d-axis Ld are magnetically and electrically orthogonal to each other. Portions of the insertion hole 34 located on the q-axis Lq side and the d-axis Ld side with respect to the permanent magnet 32 are flux barriers 35 and 36, respectively. In other words, the flux barriers 35 and 36 are disposed at both ends on the q-axis Lq side and the d-axis Ld side of the permanent magnet 32. The flux barriers 35 and 36 are magnetic voids penetrating through the rotor core 31 in the axial direction. The flux barriers 35 and 36 reduce the magnet magnetic flux (hereinafter also referred to as a reflux magnetic flux) from the permanent magnet 32 refluxing in the rotor 30 and change an inflow path of the magnet magnetic flux from the permanent magnet 32 to the stator 20. Accordingly, the magnet magnetic flux of the permanent magnet 32 (hereinafter simply referred to as a magnet magnetic flux) is effectively transmitted to the stator 20, which causes high torque to be output. It can also be said that the flux barriers 35 and 36 guide the magnet magnetic flux to the stator 20.

The rotor 30 includes a first flux barrier 35 and a second flux barrier 36 as the flux barriers 35 and 36.

The first flux barrier 35 and the second flux barrier 36 sandwich the permanent magnet 32 from both ends in the longitudinal direction of the barriers. Accordingly, it is easy to effectively transmit the magnet magnetic flux to the stator 20. The first flux barrier 35 is located on the q-axis Lq side with respect to each permanent magnet 32. The first flux barrier 35 is located on both sides in the circumferential direction (rotational direction) of the pair of permanent magnets 32. The second flux barrier 36 is located on the d-axis Ld side with respect to each permanent magnet 32. The second flux barrier 36 is located at the center in the circumferential direction (rotational direction) of the pair of permanent magnets 32.

Hereinafter, the forward side (rotational forward side) in the rotational direction (circumferential direction) of the rotary electric machine 10 is simply referred to as front F, and the rearward side in the rotational direction is simply referred to as rear R. In the case of the rotary electric machine 10 that can rotate in both directions about the central axis O, the rotational direction means a rotational direction in which the rotary electric machine 10 mainly rotates. In the illustrated example, the counterclockwise direction when the paper surface is viewed is referred to as the front F, and the clockwise direction is referred to as the rear R.

The plurality of insertion holes 34 include a plurality of first insertion holes 34f. The permanent magnet 32 arranged closer to the forward side F than another of the magnetic poles 33 configured by the pair of permanent magnets 32 is inserted into the plurality of first insertion holes 34f. The pair of permanent magnets 32 includes a front magnet 32f and a rear magnet 32r. The front magnet 32f is located on the forward side F with respect to the rear magnet 32r. The front magnet 32f is inserted into the first insertion hole 34f.

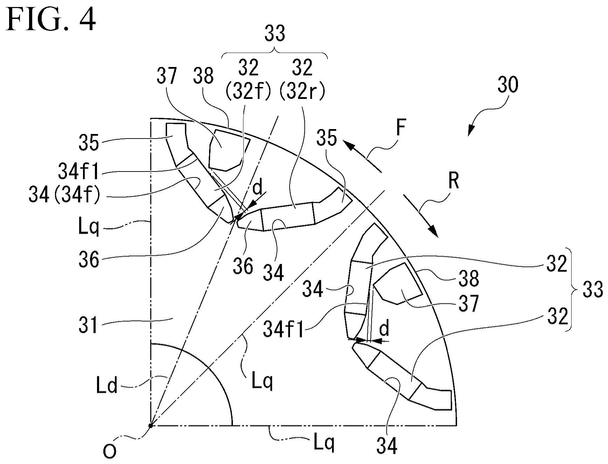

The rotor 30 further includes a plurality of third flux barriers (flux barriers) 37 and a plurality of bridges 38. The plurality of third flux barriers 37 are provided corresponding to the plurality of magnetic poles 33. In the embodiment, one third flux barrier 37 is provided for one magnetic pole 33. The third flux barrier 37 is provided for the front magnet 32f and is not provided for the rear magnet 32r. The third flux barrier 37 is provided only for the front magnet 32f. The plurality of third flux barriers 37 are magnetic voids penetrating through the rotor core 31 in the axial direction. The third flux barrier 37 is provided at a position facing outward in the radial direction (hereinafter also referred to as a first side surface 34f1) between the side surfaces of the first insertion hole 34f in the transverse direction. The third flux barrier 37 is formed to partition (divide) a magnetic flux generated from the front magnet 32f in the circumferential direction. The third flux barrier 37 is connected to the outside of the first insertion hole 34f in the radial direction. In other words, the third flux barrier 37 is connected to the first insertion hole 34f from the outside in the radial direction. That is, the third flux barrier 37 is connected to the first side surface 34f1. In the illustrated example, the third flux barrier 37 is connected to a part of the first side surface 34f1 in a plan view. On the other hand, the third flux barrier 37 is connected over the entire length of the first side surface 34f1 in the axial direction. However, as illustrated in FIG. 4, the third flux barrier 37 may be slightly away radially outward from the first insertion hole 34f. That is, the third flux barrier 37 may be close to the outer side of the first insertion hole 34f in the radial direction. In other words, the third flux barrier 37 may be close to the first insertion hole 34f from the outside in the radial direction. An interval d (mm) between the third flux barrier 37 and the first insertion hole 34f is, for example, 0.03 mm or less. The interval d is a shortest distance between the third flux barrier 37 and the first insertion hole 34f. In this case, a portion that can serve as a flow passage of the magnetic flux remains between the third flux barrier 37 and the first insertion hole 34f. However, when the radial length (area) of this portion is sufficiently small, magnetic saturation occurs. Thus, substantially, the magnetic flux generated from the front magnet 32f is partitioned in the circumferential direction by the third flux barrier 37. For example, the third flux barrier 37 may be away from the first insertion hole 34f outward in the radial direction by a distance equal to or less than the radial length of the bridge 38 (the width of the bridge 38).

In the embodiment, an example in which the third flux barrier 37 is provided corresponding to all the magnetic poles 33 will be described, but the third flux barrier 37 may be provided corresponding to at least one magnetic pole 33 among the plurality of magnetic poles 33. For example, the number of third flux barriers 37 may be only one.

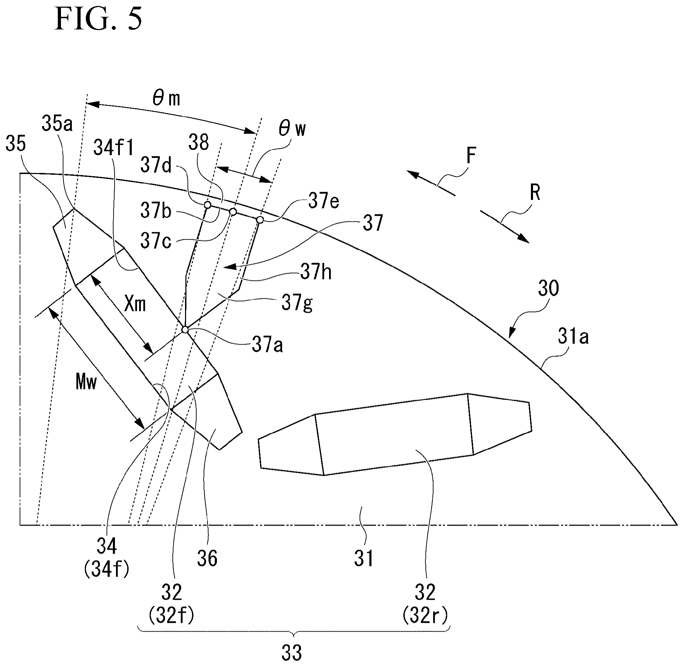

As illustrated in FIG. 5, as viewed in the axial direction in a plan view, a portion of the third flux barrier 37 closer to the inner side in the radial direction is formed in a tapered shape toward the inner side in the radial direction (that is, the first insertion hole 34f). An inner end portion 37a that is an inner end of the third flux barrier 37 in the radial direction is connected to the first insertion hole 34f from the outer side in the radial direction. The third flux barrier 37 is connected to the radial outer surface of the front magnet 32f inserted into the first insertion hole 34f. The third flux barrier 37 is formed to increase in size in the circumferential direction of the rotor core 31 toward the outside in the radial direction. The third flux barrier 37 blocks a magnetic flux closer to the forward side F in the magnetic pole 33 than another of magnetic fluxes (magnet magnetic fluxes) generated when the rotor 30 rotates.

The third flux barrier 37 has an outer circumferential side surface 37b located outward in the radial direction. The outer circumferential side surface 37b is located inward in the radial direction with respect to the outer circumferential surface 31a of the rotor core 31. The outer circumferential side surface 37b is formed along the outer circumferential surface 31a. The fact that the outer circumferential side surface 37b is formed along the outer circumferential surface 31a includes not only a case where the outer circumferential side surface 37b is completely parallel to the outer circumferential surface 31a but also a case where the outer circumferential side surface 37b is substantially parallel to the outer circumferential surface 31a. The fact that the outer circumferential side surface 37b is substantially parallel to the outer circumferential surface 31a means that the radial length of the bridge 38 to be described below is substantially equal over the entire circumferential length of the bridge 38. The rotor core 31 includes the bridge 38 between the outer circumferential surface 31a and the outer circumferential side surface 37b. That is, each bridge 38 is provided in a portion of the rotor core 31 located outward in the radial direction with respect to the plurality of third flux barriers 37.

The plurality of bridges 38 may prevent the magnetic fluxes from passing through the bridges 38 by magnetic saturation. For example, when the rotor 30 operates at a predetermined torque or more, the bridge 38 may prevent the magnetic flux from passing through the bridge 38 by magnetic saturation. When the rotor 30 operates at a torque less than the predetermined torque, the magnetic flux may pass through the bridge 38. The circumferential length and the radial width (radial length) of the bridge 38 are appropriately designed according to a rotational speed and a shape of the rotary electric machine 10. The radial width of the bridge 38 will be described below in detail.

In the embodiment, the third flux barrier 37 includes an inner end portion 37a that is a portion connected (a portion closest) to the first insertion hole 34f, a widened portion 37g that is a portion widened in the circumferential direction from the inner end portion 37a outward in the radial direction, and a connection portion 37h that is connected to the bridge 38 formed along the outer circumferential side surface 37b.

The inner end portion 37a is in a point or linear shape. Here, when the inner end portion 37a is large in the circumferential direction, a portion of the third flux barrier 37 facing the front magnet 32f from the outside in the radial direction becomes large, and the magnetic flux generated from the front magnet 32f is hindered, so that an amount of generated magnetic flux decreases. Therefore, the circumferential length of the inner end portion 37a is preferably as short as possible (for example, 5% or less of the long side of the front magnet 32f).

The widened portion 37g has a triangular shape protruding inward in the radial direction. Here, the widened portion 37g may widen in a linear shape or may be widened in a curved shape.

The connection portion 37h has a rectangular shape extending in the radial direction. However, the shape of the connection portion 37h is not particularly limited, and may be changed to another shape in which the bridge 38 is formed between the outer circumferential side surface 37b and the outer circumferential surface 31a. For example, when the radial length of the widened portion 37g outward in the circumferential direction is equal to the circumferential length of the outer circumferential side surface 37b, the circumferential size of the connection portion 37h may be equal over the entire radial length. Further, for example, when the circumferential length of the widened portion 37g outward in the radial direction is greater than the circumferential length of the outer circumferential side surface 37b, the circumferential size of a part or the whole of the connection portion 37h in the circumferential direction may be reduced outward in the radial direction.

Hereinafter, details of the third flux barrier 37 will be described.

A position and a shape of the third flux barrier 37 are determined in accordance with a barrier central angle $\theta m$ (radian), a barrier opening angle $\theta w$ (radian), and a barrier connection position Xm.

The barrier central angle $\theta m$ is an angle formed by the barrier central position 37c and the outer end portion 35a in the circumferential direction about the central axis O. The barrier central position 37c is a central position in the circumferential direction on the outer circumferential side surface 37b of the third flux barrier 37. The outer end portion 35a is an outer end portion in the radial direction on the forward side F of the first flux barrier 35.

The barrier opening angle $\theta w$ is an angle formed by a barrier front end portion 37d and a barrier rear end portion 37e in the circumferential direction about the central axis O. The barrier front end portion 37d is an end portion on the forward side F of the outer circumferential side surface 37b of the third flux barrier 37. The barrier rear end portion 37e is an end portion on the rearward side R of the outer circumferential side surface 37b of the third flux barrier 37.

A slot central angle $\theta s$ is a central angle per slot 24 (see FIG. 1) of the stator 20.

The barrier connection position Xm is a position in the circumferential direction (longitudinal direction) with respect to a magnet length Mw on the outer surface of the front magnet 32f.

As illustrated in FIG. 4, when the third flux barrier 37 is slightly away from the first insertion hole 34f, the barrier connection position Xm is a position in the circumferential direction (longitudinal direction) with respect to the magnet length Mw at which the third flux barrier 37 and the first insertion hole 34f are closest to each other on the outer surface of the front magnet 32f. The position at which the interval d between the third flux barrier 37 and the first insertion hole 34f is measured is the barrier connection position Xm.

The positions, the lengths, and the angles can be obtained, for example, from an image obtained by imaging the target rotor 30 in a plan view.

The position and the shape of the third flux barrier 37 are determined to satisfy Formulae (1) to (4). That is,

when $(2/5)\theta s < \theta m < (3/4)\theta s$,

$$0 < \theta w < (22/7)\theta m - (44/35)\theta s ... (1)$$

when $(3/4)\theta s \leq \theta m < (9/10)\theta s$,

$$0 < \theta w < -(22/3)\theta m + (33/5)\theta s ... (2)$$

$$\theta s = 2\pi/\text{Nslot} ... (3)$$

where Nslot is the number of slots of the stator 20.

$$0 \leq Xm \leq Mw ... (4)$$

The radial length of the third flux barrier 37 is determined such that a magnetic flux density of the bridge 38 is greater than a saturation magnetic flux density of a soft magnetic material. For example, the radial width of the bridge 38 is 0.15 mm, and the magnetic flux density at the bridge center portion is 2.45 T. For example, when it is assumed that the saturation magnetic flux density of the rotor core 31 is 1.95 T, a magnetic flux density of 2.45 T at a bridge center portion exceeds the saturation magnetic flux density of the rotor core 31.

Here, the third flux barrier 37 is provided for the purpose of partitioning the magnet magnetic flux. Thus, it is necessary to sufficiently narrow the bridge 38 provided outside of the third flux barrier 37 in the radial direction so that the magnetic flux does not pass through the bridge.

On the other hand, from the viewpoint of mechanical strength of the rotor core 31, it is necessary to maintain a radial width of the bridge 38 at a certain value or more in order to secure strength of the bridge 38. Accordingly, it is considered sufficient that the width of the bridge 38 is set such that the magnetic flux density exceeds the saturation magnetic flux density. The magnetic flux density of the bridge 38 is obtained through, for example, electromagnetic field analysis for modeling the rotary electric machine 10.

Next, the reason why the barrier central angle $\theta m$, the barrier opening angle $\theta w$, and the barrier connection position Xm are set based on Formulae (1) to (4) will be described with reference to FIGS. 5 to 7.

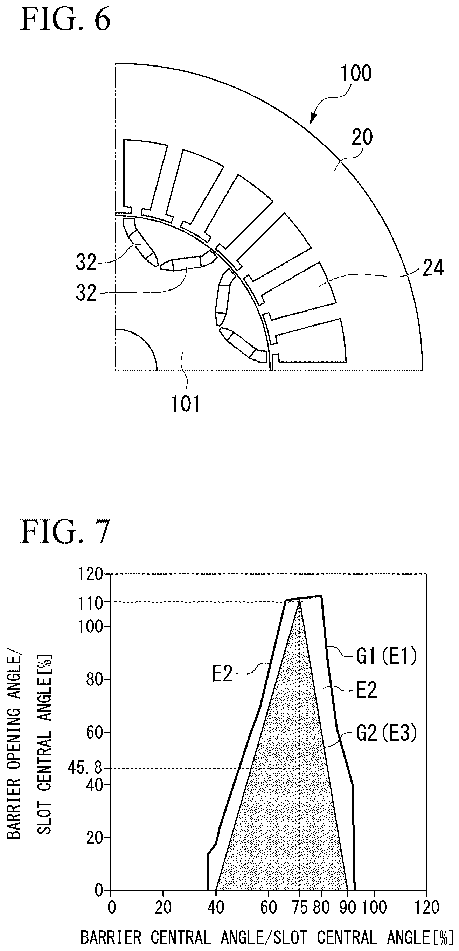

In the rotary electric machine 10 according to the embodiment illustrated in FIG. 5, the third flux barrier 37 is included in the rotor core 31. The rotary electric machine 100 according to a comparative example illustrated in FIG. 6 is different from the rotary electric machine 10 according to the embodiment only in that the third flux barrier 37 is not provided in the rotor core 101, and other configurations are similar to those of the rotary electric machine 10 according to the embodiment. FIG. 7 is a graph illustrating a result obtained by comparing torque ripples by the rotary electric machine 10 according to the embodiment with the rotary electric machine 100 according to the comparative example by electromagnetic field analysis.

In FIG. 7, the vertical axis represents (barrier opening angle $\theta w$)/(slot central angle $\theta s$) (%), and the horizontal axis represents (barrier central angle $\theta m$)/(slot central angle $\theta s$) (%). Here, in consideration of restriction of the use when an average torque is small despite of small torque ripple, the rotary electric machine 10 according to the embodiment was compared with the rotary electric machine 100 according to the comparative example in (torque ripple)/(average torque) that is an evaluation value. The smaller the evaluation value is, the better performance of the rotary electric machines 10 and 100 is.

A graph G1 represents a line (contour line) indicating a condition that an evaluation value of the rotary electric machine 10 according to the embodiment is equivalent to an evaluation value of the rotary electric machine 100 according to the comparative example. In an inner area E1 located inside the graph G1, the evaluation value of the rotary electric machine 10 according to the embodiment is smaller (superior) than the evaluation value of the rotary electric machine 100 according to the comparative example.

A graph G2 represents a line defined by Formulae (1) and (2) to be described below.

The graph G1 shows a result of the electromagnetic field analysis when the barrier connection position Xm of the inner end portion 37a of the third flux barrier 37 is disposed at the central position (that is, Xm = (1/2)Mw) of the magnet length Mw of the front magnet 32f. The reason of the electromagnetic field analysis on the graph G1 in the case of Xm = (1/2)Mw is as follows.

That is, an influence of movement of the barrier connection position Xm of the inner end portion 37a of the third flux barrier 37 is limited. Even when the barrier connection position Xm is moved in the range of 0 to (magnet maximum length) of the magnet length Mw, there is no influence on an effect range in which torque pulsation is reduced. For example, when the barrier connection position Xm is moved in the range of $0 \leq$ Mw $\leq$ (magnet maximum length), an amount of magnetic flux contributing to a torque changes. Although the average torque increases or decreases in accordance with the change in the amount of magnetic flux, the torque ripple also increases or decreases as the average torque increases or decreases. Therefore, the influence on the evaluation value is canceled, and the evaluation value for a reduction in the torque pulsation does not change significantly.

As a result of the electromagnetic field analysis, in the inner area E1 of the graph G1, the torque ripple of the rotary electric machine 10 became smaller than the torque ripple of the rotary electric machine 100, and the torque pulsation was reduced. Here, in the graph G1, a reduction in the torque ripple of the rotary electric machine 10 is relatively small in an area E2 outside the graph G2. That is, the torque ripple of the rotary electric machine 10 is appropriately smaller in the inner area E3 of the graph G2 than the torque ripple of the rotary electric machine 100. Accordingly, in the rotary electric machine 10, the torque pulsation is appropriately reduced in the inner area E3 of the graph G2 than in the rotary electric machine 100. An inner area E3 of the graph G2 corresponds to the range of the barrier central angle θm and the barrier opening angle θw expressed by the above-described Formula (1) and the range of the barrier central angle θm and the barrier opening angle θw expressed by Formula (2).

In the graph of FIG. 7, 40% of (barrier central angle θm)/(slot central angle θs) on the horizontal axis is a position corresponding to (2/5)θs of Formula (1). 75% of (barrier central angle θm)/(slot central angle θs) on the horizontal axis is a position corresponding to (3/4)θs in Formulae (1) and (2). 90% of (barrier central angle θm)/(slot central angle θs) on the horizontal axis is a position corresponding to (9/10)θs of Formula (2).

In the graph of FIG. 7, when (barrier opening angle θw)/(slot central angle θs) on the vertical axis is 45.8% and (barrier central angle θm)/(slot central angle θs) on the horizontal axis is 75%, the evaluation value became minimum, and the torque pulsation was optimally reduced.

From the result of the electromagnetic field analysis, the third flux barrier 37 was determined to have a position and a shape so that Formulae (1) to (4) are satisfied.

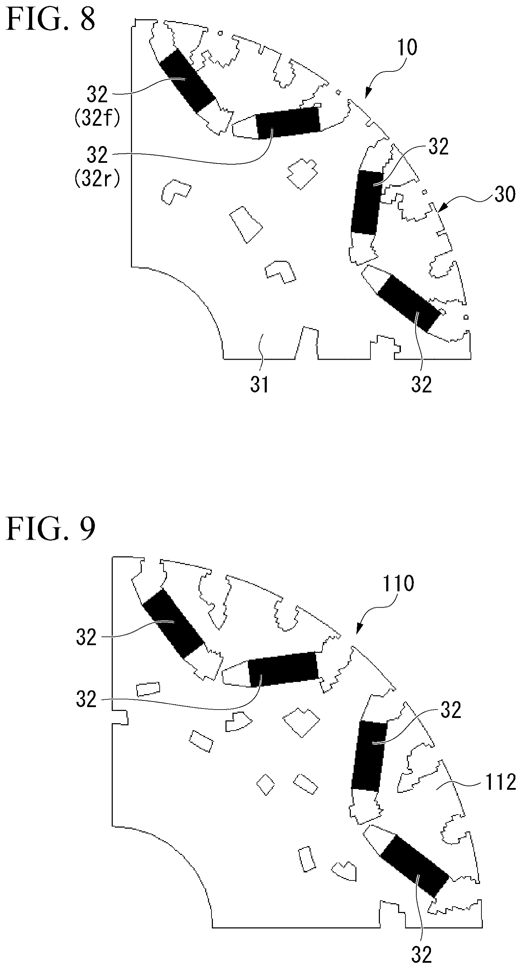

Next, an example in which torque pulsation is compared between the rotary electric machine 10 according to the embodiment and a rotary electric machine 110 according to the comparative example will be described with reference to FIGS. 8 to 10.

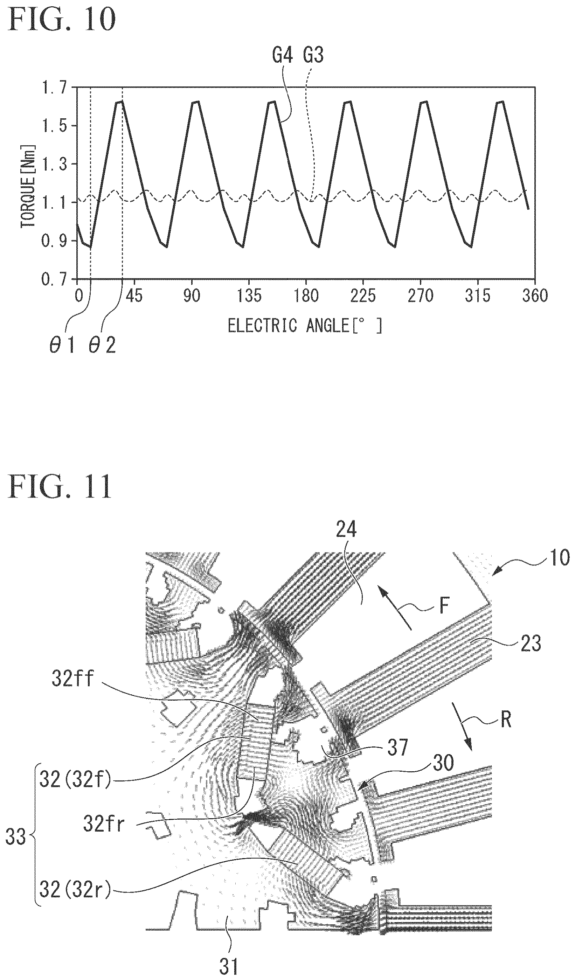

FIG. 8 illustrates the rotor 30 capable of optimally reducing torque pulsation in the rotary electric machine 10 according to the embodiment. FIG. 9 illustrates a rotor 112 that maximizes the average torque in the rotary electric machine 110 according to the comparative example. FIG. 10 is a graph illustrating a relationship (torque waveform) between an electric angle and a torque in the rotary electric machine 10 according to the embodiment and the rotary electric machine 110 according to the comparative example. In FIG. 10, the vertical axis represents the torque (Nm), and the horizontal axis represents the electric angle (°). The shapes of the rotors 30 and 112 were obtained based on an analysis method described in Japanese Patent Application Laid-Open No. 2021-114099.

In FIG. 10, a graph G3 indicates a torque waveform of the rotary electric machine 10 according to the embodiment. A graph G4 illustrates a torque waveform of the rotary electric machine 110 according to the comparative example. By comparing the torque waveform of the graph G3 with the torque waveform of the graph G4, it can be confirmed that torque pulsation of the graph G3 is considerably smaller than torque pulsation of the graph G4. Accordingly, it can be confirmed that the torque pulsation of the rotary electric machine 10 according to the embodiment is considerably smaller than the torque pulsation of the rotary electric machine 110 according to the comparative example.

Next, magnetic flux density vectors in the rotary electric machine 10 according to the embodiment illustrated in FIG. 8 and the rotary electric machine 110 according to the comparative example illustrated in FIG. 9 will be described with reference to FIGS. 11 to 14.

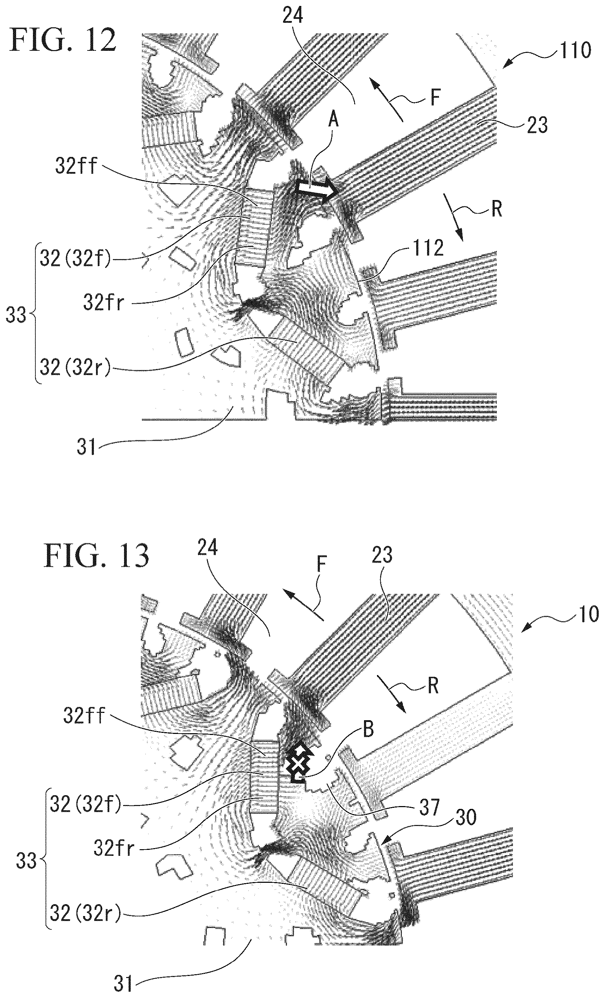

First, in FIGS. 11 and 12, magnetic flux density vectors generated when the rotor 30 according to the embodiment and the rotor 112 according to the comparative example are located at an electric angle θ1 at which the torque waveform of the rotary electric machine 110 according to the comparative example indicated by the graph G4 of FIG. 10 becomes minimum will be described.

FIG. 11 illustrates magnetic flux density vectors when the rotor 30 is located at the electric angle θ1 in the rotary electric machine 10 according to the embodiment.

As illustrated in FIG. 11, in the rotary electric machine 10 according to the embodiment, a magnetic flux coming from the portion 32fr on the rearward side R of the front magnet 32f to the forward side F is blocked by the third flux barrier 37. Main paths of the magnetic fluxes partitioned in the circumferential direction are directed to different teeth 23. Thus, this magnetic flux can be prevented from flowing toward the teeth 23 located on the rearward side R with respect to the front magnet 32f. Thus, a negative torque generated by the magnetic flux can be reduced. Accordingly, the rotary electric machine 10 according to the embodiment can curb a decrease in torque at the electric angle θ1.

FIG. 12 illustrates magnetic flux density vectors when the rotor 112 is located at the electric angle θ1 in the rotary electric machine 110 according to the comparative example.

As illustrated in FIG. 12, in the rotary electric machine 110 according to the comparative example, the magnetic flux coming from the portion 32fr on the rearward side R of the front magnet 32f toward the forward side F is directed to the teeth 23 located on the rearward side R with respect to the front magnet 32f as indicated by an arrow A. The magnetic flux toward the teeth 23 generates a negative torque. Therefore, in the rotary electric machine 110 according to the comparative example, the torque at the electric angle θ1 becomes the local minimum value.

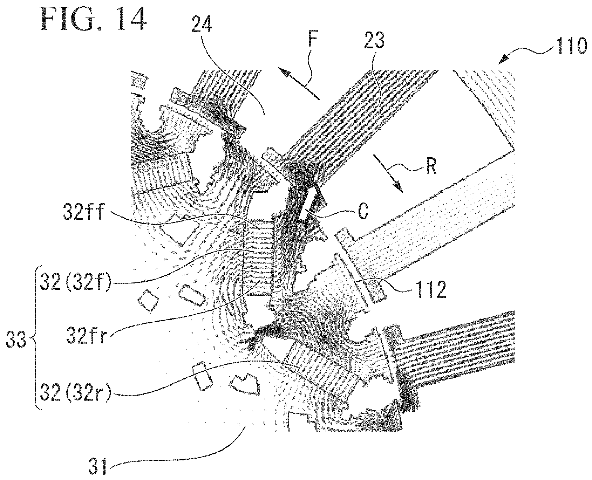

Next, in FIGS. 13 and 14, a magnetic flux density vector generated when the rotor 30 according to the embodiment and the rotor 112 according to the comparative example are located at the electric angle θ2 at which the torque waveform of the rotary electric machine 110 according to the comparative example shown by the graph G4 in FIG. 10 becomes maximum will be described.

FIG. 13 illustrates a magnetic flux density vector when the rotor 30 is located at the electric angle θ2 in the rotary electric machine 10 according to the embodiment.

As illustrated in FIG. 13, in the rotary electric machine 10 according to the embodiment, the magnetic flux coming from the portion 32fr on the rearward side R of the front magnet 32f toward the forward side F is blocked by the third flux barrier 37. Thus, this magnetic flux can be prevented from heading toward the teeth 23 located on the forward side F with respect to the front magnet 32f as indicated by arrow B. That is, the third flux barrier 37 functions such that only the magnetic flux from the portion 32ff on the forward side F of the front magnet 32f toward the forward side F is directed toward the teeth 23 located on the forward side F with respect to the front magnet 32f. Thus, the positive torque generated by the magnetic flux can be reduced. Accordingly, the rotary electric machine 10 according to the embodiment can curb the torque at the electric angle θ2 to be small.

In this way, the rotary electric machine 10 according to the embodiment can curb a decrease in torque at the electric angle θ1 and can curb the torque at the electric angle θ2 to be small as illustrated in the graph G3 of FIG. 10. As a result, in the rotary electric machine 10 according to the embodiment, it is possible to curb the torque to be small so that there is almost no difference between the maximum torque and the minimum torque, and it is possible to reduce torque pulsation of the rotary electric machine 10 as the IPMSM.

FIG. 14 illustrates magnetic flux density vectors when the rotor 112 is located at the electric angle θ2 in the rotary electric machine 110 according to the comparative example.

As illustrated in FIG. 14, the rotor core 31 of the rotary electric machine 110 according to the comparative example does not include the third flux barrier for partitioning the magnetic flux from the front magnet 32f as described above. Therefore, in the rotary electric machine 110 according to the comparative example, most of the magnetic flux of the front magnet 32f is directed from both the portion 32ff on the forward side F and the portion 32fr on the rearward side R in the front magnet 32f to the teeth 23 located on the forward side F with respect to the front magnet 32f as indicated by an arrow C. Thus, the magnetic flux from the entire surface of the front magnet 32f to the forward side F contributes to a positive torque. Therefore, in the rotary electric machine 110 according to the comparative example, the torque at the electric angle θ2 becomes a local maximum value.

In this way, in the rotary electric machine 110 according to the comparative example, as indicated in the graph G4 of FIG. 10, the torque at the electric angle θ1 becomes the local minimum value, and the torque at the electric angle θ2 becomes the local maximum value. As a result, in the rotary electric machine 110 according to the comparative example, a difference between the maximum torque and the minimum torque increases, and the torque pulsation increases.

According to the rotor core 31, the rotor 30, the rotary electric machine 10, and the designing method for the rotor core 31 according to the above-described embodiment, it is possible to obtain the following effects.

Here, the inventors of the present application have found that the torque pulsation of the IPMSM can be reduced by designing the position and the shape of the third flux barrier 37 based on the magnetic flux closer to the forward side F in the magnetic pole 33.

Accordingly, a method of designing the rotor core 31 includes a step of designing the position and the shape of the third flux barrier 37. Specifically, in the step of the method of designing the rotor core 31, when the torque becomes maximum, the magnetic flux that generates the torque in the forward side F among the magnetic fluxes closer the forward side F in the magnetic pole 33 is blocked by the third flux barrier 37. Further, when the torque becomes minimum, the magnetic flux that generates the torque of the rearward side R among the magnetic fluxes closer to the forward side F in the magnetic pole 33 is blocked by the third flux barrier 37. In this way, in this designing method, the position and the shape of the third flux barrier 37 are designed based on the magnetic flux closer to the forward side F in the magnetic pole 33.

In the step of the method of designing the rotor core 31, the front magnet 32f of the magnetic pole 33 is inserted into the first insertion hole 34f, and the third flux barrier 37 is provided outside of the first insertion hole 34f in the radial direction of the rotor core 31. Further, the third flux barrier 37 is connected to the first insertion hole 34f from the outside in the radial direction. Thus, the magnetic flux coming from the front magnet 32f to the forward side F can be partitioned by the third flux barrier 37 into the forward side F and the rearward side R. Accordingly, when the torque becomes maximum, the magnetic flux on the rearward side R of the third flux barrier 37 (the magnetic flux of the portion 32fr) is blocked from flowing toward the forward side F to block a part of the magnetic flux generating the torque on the forward side F. When the torque becomes minimum, the magnetic flux on the forward side F of the third flux barrier 37 (the magnetic flux of the portion 32ff) is blocked from flowing toward the rear R to block a part of the magnetic flux that generates the torque toward the rear R. In this way, the torque pulsation of the rotary electric machine 10 can be reduced as the IPMSM by curbing the torque in the forward side F when the torque becomes maximum and curbing the torque in the rear R when the torque becomes minimum.

The third flux barrier 37 has a portion that becomes larger in the circumferential direction of the rotor core 31 outward in the radial direction. That is, in the third flux barrier 37, a portion closer to the first insertion hole 34f is formed in a tapered shape toward the first insertion hole 34f, and the inner end portion 37a is connected to the first insertion hole 34f from the outside in the radial direction. Thus, an area where the inner end portion 37a of the third flux barrier 37 is connected to the first insertion hole 34f can be reduced. Accordingly, the magnetic flux can be appropriately generated from the front magnet 32f without being excessively blocked by the third flux barrier 37.

By increasing the size of the third flux barrier 37 in the circumferential direction of the rotor core 31 outward in the radial direction, it is possible to prevent the magnetic flux coming from the front magnet 32f from passing through the third flux barrier 37.

In this way, by appropriately generating the magnetic flux from front magnet 32f, and further preventing the magnetic flux coming from the front magnet 32f from passing through the front magnet 32f, it is possible to more appropriately reduce the torque pulsation.

Further, by connecting the third flux barrier 37 to the front magnet 32f inserted into the first insertion hole 34f, it is possible to prevent the magnetic flux coming from the front magnet 32f from passing between the front magnet 32f and the third flux barrier 37. Accordingly, the torque pulsation can be more appropriately reduced.

In addition, of the magnetic flux generated from the front magnet 32f, the magnetic flux from the rearward side R to the forward side F is blocked by the third flux barrier 37. Thus, it is possible to block the magnetic flux generating the torque of the forward side F when the torque becomes maximum and to curb the torque of the forward side F. It is possible to block the magnetic flux generating the torque of the rear R when the torque becomes minimum and to curb the torque of the rear R. Accordingly, torque pulsation can be reduced.

Since the magnetic flux density passing through the bridge 38 exceeds the saturation magnetic flux, it is possible to prevent the magnetic flux from passing through the bridge 38. Accordingly, the torque pulsation can be more appropriately reduced.

Further, the third flux barrier 37 is located on the forward side F of the front magnet 32f when the barrier central angle $\theta m$ is in the range of $(2/5)\theta s < \theta m < (3/4)\theta s$. In this case, the barrier opening angle $\theta w$ of the third flux barrier 37 is set to satisfy $0 < \theta w < (22/7)\theta m - (44/35)\theta s$. Accordingly, it is possible to block the magnetic flux generating the torque in the forward side F when the torque becomes maximum and block the magnetic flux generating the torque in the rear R when the torque becomes minimum. Thus, by curbing the torque in the forward side F when the torque becomes maximum and curbing the torque in the rear R when the torque becomes minimum, it is possible to reduce the torque pulsation of the rotary electric machine 10 as the IPMSM.

The third flux barrier 37 is located on the rearward side R of the front magnet 32f when the barrier central angle $\theta m$ is in the range of $(3/4)\theta s \leq \theta m < (9/10)\theta s$. In this case, the barrier opening angle $\theta w$ of the third flux barrier 37 is set to satisfy $0 < \theta w < -(22/3)\theta m + (33/5)\theta s$. Accordingly, it is possible to block the magnetic flux generating the torque in the forward side F when the torque becomes maximum and block the magnetic flux generating the torque in the rear R when the torque becomes minimum. Thus, by curbing the torque in the forward side F when the torque becomes maximum and curbing the torque in the rear R when the torque becomes minimum, it is possible to reduce the torque pulsation of the rotary electric machine 10 as the IPMSM.

The technical scope of the present invention is not limited only to the above-described embodiments, and various modifications can be made without departing from the gist of the present invention.

The shape of the stator 20 is not limited only to the forms described in the above-described embodiment.

Specifically, the dimensions of the outer and inner diameters of the stator core 21, the stacking thickness, the number of slots, the dimensional proportion between the circumferential direction and the radial direction of the teeth 23, the dimensional proportion between the teeth 23 and the core back 22 in the radial direction, and the like can be arbitrarily designed according to desired characteristics of the rotary electric machine 10.

The shape of the rotor 30 is not limited only to the forms described in the above-described embodiment. Specifically, the dimensions of the outer and inner diameters of the rotor core 31, the stacking thickness, the number of poles, and the like can be arbitrarily designed according to desired characteristics of the rotary electric machine 10.

In the above-described embodiment, both the stator core 21 and the rotor core 31 are stacked cores, but may not be stacked cores.

The second flux barrier 36 may not be provided.

The third flux barrier 37 may not penetrate through the rotor core 31 in the axial direction. In this case, the third flux barrier 37 may be connected to only a part of the first side surface 34f1 in the axial direction.

In the above embodiment, one magnetic pole 33 includes two permanent magnets 32. However, the present invention is not limited thereto. For example, one magnetic pole 33 may include one permanent magnet 32, three permanent magnets 32, or four or more permanent magnets 32. As one set of permanent magnets 32, another form including one or more permanent magnets 32 is appropriately adopted.

For example, when one set of permanent magnets 32 is one permanent magnet 32, the one permanent magnet 32 may have a rectangular shape that is long in a direction orthogonal to the d-axis Ld in the plane view. In this case, the insertion hole 34 itself into which one permanent magnet 32 is inserted is the first insertion hole 34f.

For example, when one set of permanent magnets 32 is three permanent magnets 32 and the three permanent magnets 32 are arranged in the circumferential direction, the following disposition may be adopted. In this case, the permanent magnet 32 located at the center in the circumferential direction may have a rectangular shape that is long in a direction orthogonal to the d-axis Ld in the plane view. Further, in this case, the two permanent magnets 32 located on both sides in the circumferential direction may extend outward in the radial direction from the d-axis Ld side toward the q-axis Lq side in the plane view. In this case, of the three or more permanent magnets 32, the insertion hole 34 itself into which the permanent magnet 32 located at the foremost position is inserted is the first insertion hole 34f.

In addition, a component in the above-described embodiment can be appropriately replaced with a well-known component without departing from the gist of the present invention, and the above-described modification examples may be appropriately combined with each other.

INDUSTRIAL APPLICABILITY

According to the present invention, torque pulsation is reduced. Therefore, industrial applicability is significant.

REFERENCE SIGNS LIST

10, 100 Rotary electric machine
20 Stator
21 Stator core
22 Core back
23 Teeth
24 Slot
30, 112 Rotor
31 Rotor core
31a Outer circumferential surface
32 Permanent magnet
32f Front magnet
32ff Portion
32fr Portion
32r Rear magnet
33 Magnetic pole
34 Insertion hole
34f First insertion hole
34f1 First side surface
35 First flux barrier (flux barrier extending rotationally forward from first insertion hole)
35a Outer end portion
36 Second flux barrier
37 Third flux barrier (flux barrier)
37a Inner end portion
37b Outer circumferential side surface
37c Barrier central position
37d Barrier front end
37e Barrier rear end
37g Widened portion
37h Connection portion
38 Bridge
50 Case
60 Rotary shaft
A Arrow
B Arrow
C Arrow
E1 Inner area
E2 Area
E3 Inner area
F Front
G1 Graph
G2 Graph
G3 Graph
G4 Graph
Ld d-axis
Lq q-axis

O Central axis
R Rear
Xm Barrier connection position
$\theta$m Barrier central angle
$\theta$s Slot central angle
$\theta$w Barrier opening angle

**Claims**

1. A rotor core used in an interior permanent magnet motor, to which a plurality sets of permanent magnets that form magnetic poles are to be disposed in a circumferential direction of the rotor core, wherein:

   a plurality of insertion holes penetrating through the rotor core in an axial direction of the rotor core and into which the permanent magnets are to be inserted are formed in the rotor core;
   a flux barrier provided corresponding to at least one of the plurality of magnetic poles is formed in the rotor core;
   the insertion holes include a first insertion hole into which the permanent magnet disposed closer to a rotational forward side than another of the magnetic poles is to be inserted; and
   the flux barrier

   is provided at a position facing a first side surface outward in a radial direction of the rotor core, between side surfaces of the first insertion hole in a transverse direction, and is connected to the first side surface.

2. A rotor core used in an interior permanent magnet motor, to which a plurality sets of permanent magnets that form magnetic poles are to be disposed in a circumferential direction of the rotor core, wherein:

   a plurality of insertion holes penetrating through the rotor core in an axial direction of the rotor core and into which the permanent magnets are to be inserted are formed in the rotor core;
   a flux barrier provided corresponding to at least one of the plurality of magnetic poles is formed in the rotor core;
   the insertion holes include a first insertion hole into which the permanent magnet disposed closer to a rotational forward side than another of the magnetic poles is to be inserted; and
   the flux barrier is provided close to the first insertion hole to partition a magnetic flux generated from a permanent magnet inserted into the first insertion hole in the circumferential direction at a position facing a first side surface outward in a radial direction of the rotor core between side surfaces of the first insertion hole in a transverse direction.

3. The rotor core according to claim 1 or 2, wherein the flux barrier has a portion that becomes larger in a circumferential direction of the rotor core outward in the radial direction.

4. The rotor core according to claim 1 or 2, wherein the flux barrier blocks a magnetic flux from a rotational rearward side to a rotational forward side of the magnetic pole among magnetic fluxes generated from the permanent magnet inserted into the first insertion hole.

5. The rotor core according to claim 1 or 2, wherein a bridge is provided in a portion located outward in the radial direction of the rotor core with respect to the flux barrier.

6. A rotor comprising:

   the rotor core according to claim 1 or 2; and
   the plurality sets of permanent magnets embedded in the rotor core and forming a magnetic pole, and disposed in a circumferential direction of the rotor core in the rotor core.

7. A rotary electric machine comprising:

   an annular stator; and
   the rotor according to claim 6 disposed inside the stator.

8. The rotary electric machine according to claim 7, wherein a barrier opening angle $\theta$w in a circumferential direction of the rotor in an outer circumferential side surface of the flux barrier located outward in a radial direction of the rotor satisfies Formulae (1) and (2) below:

   when $(2/5)\theta s < \theta m < (3/4)\theta s$,

   $$0 < \theta w < (22/7)\theta m - (44/35)\theta s \ ... \ (1)$$

   when $(3/4)\theta s \leq \theta m < (9/10)\theta s$,

   $$0 < \theta w < -(22/3)\theta m + (33/5)\theta s \ ... \ (2)$$

   $$\theta s = 2\pi/N slot \ ... \ (3)$$

   where Nslot in the above Formula (3) is the number of slots of the stator, and
   $\theta$m is a barrier central angle formed between a circumferential central position on the outer circumferential side surface and an outer end portion in the radial direction of the flux barrier extending rotationally forward from the first insertion hole.

**9.** A method of designing the rotor core according to claim 1 or 2, the method comprising: a step of designing a position and a shape of the flux barrier based on a magnetic flux of the magnetic pole close to a rotational forward side.

**10.** The method of designing the rotor core according to claim 9, wherein in the step, the position and the shape of the flux barrier are designed to block a magnetic flux that generates a rotational forward torque among magnetic fluxes in the magnetic pole close to the rotational forward side when the torque becomes maximum, and to block a magnetic flux that generates a rotational rearward torque among magnetic fluxes in the magnetic pole close to the rotational forward side when the torque becomes minimum.

FIG. 1

FIG. 2

FIG. 3

FIG. 4

## FIG. 5

# FIG. 6

# FIG. 7

FIG. 8

FIG. 9

# FIG. 10

# FIG. 11

FIG. 12

FIG. 13

FIG. 14

## INTERNATIONAL SEARCH REPORT

| International application No. |
|---|
| **PCT/JP2024/005233** |

| A. | CLASSIFICATION OF SUBJECT MATTER |
|---|---|

*H02K 1/276*(2022.01)i
FI: H02K1/276

According to International Patent Classification (IPC) or to both national classification and IPC

| B. | FIELDS SEARCHED |
|---|---|

Minimum documentation searched (classification system followed by classification symbols)

H02K1/276

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2019/146006 A1 (MITSUBISHI ELECTRIC CORPORATION) 01 August 2019 (2019-08-01) <br> paragraphs [0009]-[0150], fig. 1-14 | 2, 4-10 |
| Y | | 1, 3-10 |
| Y | US 2020/0083768 A1 (LG ELECTRONICS INC.) 12 March 2020 (2020-03-12) <br> paragraphs [0221], [0272], fig. 6B, 8B | 1, 3-10 |
| Y | JP 2014-155309 A (HONDA MOTOR CO., LTD.) 25 August 2014 (2014-08-25) <br> paragraph [0064], fig. 15 | 3 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 April 2024** | **16 April 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

EP 4 668 547 A1

**INTERNATIONAL SEARCH REPORT**
Information on patent family members

International application No.

**PCT/JP2024/005233**

| Patent document cited in search report | | | Publication date (day/month/year) | Patent family member(s) | | | Publication date (day/month/year) |
|---|---|---|---|---|---|---|---|
| WO | 2019/146006 | A1 | 01 August 2019 | US 2021/0083536 A1 paragraphs [0023]-[0164], fig. 1-14 CN 111602320 A | | | |
| US | 2020/0083768 | A1 | 12 March 2020 | KR 10-2020-0035728 A | | | |
| JP | 2014-155309 | A | 25 August 2014 | US 2014/0217849 A1 paragraph [0068], fig. 15 CN 103986259 A | | | |

Form PCT/ISA/210 (patent family annex) (July 2022)

24

**EP 4 668 547 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2023060098 A
- JP 5985358 B
- JP 2021114099 A